# EUROPÄISCHE PATENTSCHRIFT

(11) **EP 1 415 866 B1**
(45) Veröffentlichungstag und Bekanntmachung des Hinweises auf die Patenterteilung: **30.03.2005**
(21) Anmeldenummer: 03028659.5
(22) Anmeldetag: 26.09.1998
(51) Int. Cl.: B60R 19/34

(54) **Pralldämpfer für ein Kraftfahrzeug**
Shock absorber for motor vehicle
Amortisseur de choc pour véhicule automobile

(30) Priorität: 16.10.1997 DE 19745656
(43) Veröffentlichungstag der Anmeldung: 06.05.2004
(62) Teilanmeldung aus: 98118265.2
(73) Patentinhaber: DaimlerChrysler AG, 70567 Stuttgart (DE)
(72) Erfinder: Hartlieb, Markus, 72141 Waldorfhäslach (DE); Kröger, Matthias, 30659 Hannover (DE); Nohr, Matthias, Dr., 73728 Esslingen (DE); Popp, Karl, Prof. Dr., 31535 Neustadt (DE)

(56) Entgegenhaltungen:
- DE-A- 19 633 110
- US-A- 3 482 653
- US-A- 3 893 726
- US-A- 5 460 421

## Beschreibung

Die Erfindung betrifft einen Pralldämpfer für ein Kraftfahrzeug gemäß dem Oberbegriff des Anspruches 1.

In der DE 196 33 110 ist ein Pralldämpfer für einen Stoßfänger eines Kraftfahrzeuges beschrieben, welcher zwei Deformations-elemente mit unterschiedlicher Steifigkeit umfasst, die in Abhängigkeit von der Aufprallgeschwindigkeit des Fahrzeuges beaufschlagt werden. Ein weniger steifes Deformationselement ist ab einer vorbestimmten Fahrgeschwindigkeit mit einem steiferen Deformationselement gekoppelt, welches bei einem Aufprall mit dieser Fahrgeschwindigkeit noch nicht verformt werden würde. Damit das steifere Deformationselement in Abhängigkeit von gemessenen Aufprallwerten bei Bedarf genau zur richtigen Zeit zugeschaltet werden kann, ist dieses durch ein Antriebssystem in den Deformationsraum bewegbar. Auch das Antriebssystem muss dann den Aufprallbelastungen standhalten können, wodurch diese Anordnung nur mit relativ großem Aufwand funktionstüchtig zu verwirklichen ist.

Aus der DE 41 21 497 C2 ist ein Pralldämpfer mit einem Kolben-/Zylindersystem bekannt, dessen Kolbenbewegung beim Aufprall erfasst und bei Erreichen einer großen Verschiebegeschwindigkeit des Kolbens angehalten wird, wonach der Pralldämpfer durch seine plastische Verformung Aufprallenergie abbaut. Der Kolben kann durch detektorgesteuerte, radial einschiebbare Verriegelungsbolzen oder halbringförmige Verriegelungselemente arretiert werden, wonach der Pralldämpfer plastisch verformt wird. Bei diesem Pralldämpfer ist also nur eine Deformationsstufe mit plastischer Verformung für den Energieabbau beim Fahrzeugaufprall vorhanden.

Aus der DE 40 37 101 A1 ist ein Pralldämpfer für einen Stoßfänger in einem Kraftfahrzeug bekannt, dessen Außenrohr bei einem Fahrzeugaufprall verformbar ist, wobei eine träge Masse auf das Außenrohr einwirkt, deren trägheitsbedingte Verlagerung die Veränderung der Querschnittsform des Außenrohres hervorruft. Eine Einstellmöglichkeit für das Pralldämpferverhalten ist hier nicht vorgesehen.

In der US 3 789 948 A1 ist ein Pralldämpfer im Vorbau eines Kraftwagens beschrieben, dessen Dämpferfeder in Abhängigkeit der Geschwindigkeit des Kraftwagens mit geringerem oder nur mit hohem Kraftaufwand zusammendrückbar gesteuert ist, wodurch bei einem Aufprall mit höherer Geschwindigkeit die Wirkung der Dämpferfeder länger erhalten bleibt. Um den Federwiderstand zu verändern wird hier ein aufwendiger Verstellmechanismus vorgeschlagen, der im Fahrbetrieb fortlaufend beaufschlagt wird und den Federwiderstand der gefahrenen Geschwindigkeit anpasst.

In der US 4 929 008 A1 ist ein Pralldämpfer beschrieben, dessen Aufprallenergieabbau zuerst in einem gasbefüllbaren, entfaltbaren Block dann in Scherbolzen und endlich in einem Dämpfermaterial erfolgt, so dass bis zu drei Dämpfungsvorgänge nacheinander eingeleitet werden, je nachdem, wie stark der Aufprall erfolgt. Der Energieabbau wird hier durch die eingeleiteten Kräfte verursacht und kann nicht individuell gesteuert werden.

Aus der gattungsbildenden US 3 893 726 B1 ist ein Pralldämpfer für ein Kraftfahrzeug, mit einem beim Fahrzeugaufprall verformbaren Deformationskörper, in dessen Weg ein Sperrteil hineinragt, mit welchem aufgrund der Krafteinwirkung beim Aufprall eine plastische Verformung des Deformationskörpers unter Absorption von Aufprallenergie herbeigeführt wird, wobei der Verformungswiderstand des Deformationskörpers durch eine Steuerung in einer zusätzlichen Deformationsstufe erhöht werden kann, wobei das Sperrteil mindestens zwei Schaltstellungen aufweist, in denen es in den Verschiebeweg des Deformationskörpers hineinragt, wodurch der Deformationskörper durch die Krafteinwirkung beim Aufprall weniger oder mehr plastisch verformt wird, ist.

Die Aufgabe der Erfindung besteht darin, bei einem gattungsgemäßen Pralldämpfer einen einfach zu verwirklichenden, dem Fahrzeugaufprall gesteuert anpassbaren Verformungswiderstand vorzusehen.

Die Aufgabe wird bei einem gattungsgemäßen Pralldämpfer durch die kennzeichnenden Merkmale des Patentanspruches 1 gelöst. Das Sperrteil umfasst mindestens zwei nacheinander wirkende Verformungskörper, die wahlweise einzeln oder gemeinsam mit unterschiedlicher Erstreckung in den Verschiebeweg des Deformationskörpers hineinragen.

Es ist von Vorteil, wenn ein Pralldämpfer, der z. B. als Crashabsorber in einen Längsträger oder eine Stoßstangenhalterung eingesetzt ist, in seinem Umformwiderstand einstellbar ausgebildet ist, so dass er nach Ermittlung der nach Möglichkeit beim Aufprall abzubauenden Kräfte, erfasst auf Grund einer Precrasherkennung oder durch eine Fahrzeugsensorik, vor oder während des Fahrzeugaufpralles in seiner Wirkung an die Unfallschwere anpassbar ist.

So kann das Sperrteil auf Grund eines sich durch verschiedene, beim Aufprall sensierte Messwerte ergebenen Aufprallmesswerte gesteuert werden oder durch eine Precrasherkennung, die z. B. die Fahrzeuggeschwindigkeit, die Näherungsgeschwindigkeit des Unfallgegners oder dessen Kontur berücksichtigt, das Verformungsverhalten des Pralldämpfers der Unfallschwere von dem Aufprall bereits angepasst werden.

Die Verschiebung eines Sperrteiles kann in unterschiedliche Positionen, in denen es eine weniger starke oder starke plastische Verformung des Deformationselementes unter Absorption von Aufprallenergie herbeiführt, indem es unterschiedlich in den Verschiebeweg des Deformationskörpers hineinragt, stellt eine einfach und kostengünstig zu verwirklichende Lösung zur Ausbildung des Pralldämpfers da.

Das dem Aufprall angepasste Deformationsverhalten führt zu einer Reduzierung der Insassenbelastung, da die Energieabsorption im Pralldämpfer optimiert werden kann. Außerdem kann durch die Steuerung des Pralldämpfers auch auf die Crashkompatibilität des Fahrzeugs in Bezug auf dessen Unfallgegner Rücksicht genommen werden, und auch die Reparaturkosten des mit diesem Pralldämpfer ausgestatteten Fahrzeuges können positiv beeinflusst werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:

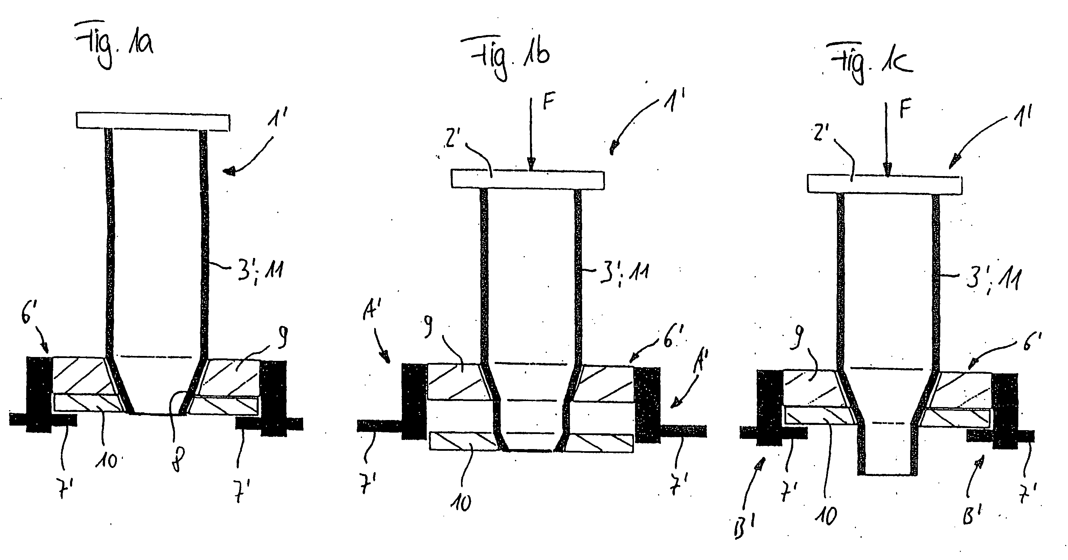

- Fig. 1a: ein Ausführungsbeispiel eines Pralldämpfers in einer Ausgangsposition vor dem Fahrzeugaufprall,
- Fig. 1b: den Pralldämpfer aus Fig. 1a beim Fahrzeugaufprall und mit gering eingestelltem Verformungswiderstand, und
- Fig. 1c: den Pralldämpfer aus Fig. 1a beim Fahrzeugaufprall und mit höher eingestelltem Verformungswiderstand.

In den Figuren ist ein Pralldämpfer 1' dargestellt, wie er zur Halterung einer Stoßstange in einem Kraftfahrzeug oder als Einsatz im Längsträger Verwendung findet, aber auch beliebig anderswo eingesetzt werden könnte. Der Pralldämpfer 1' hat dabei die Aufgabe, bei einer bei einem Fahrzeugaufprall auf eine Prallplatte 2' auftreffenden Kraft (Pfeil F), durch seine plastische Verformung Aufprallenergie zu absorbieren.

Der Pralldämpfer 1' ist dabei so ausgebildet, dass sein Verformungswiderstand mit mindestens zwei Schaltstufengesteuert werden kann, und somit der Pralldämpfer 1' an die Unfallschwere anpassbar ist. Nach einer Erkennung des Aufpralles durch Sensoren, die vor dem Aufprall als Precrasherkennung, z. B. über bildgebende Systeme, oder während des Aufpralles Aufpralldaten ermitteln, werden bei den gezeichneten Ausbildungen dem Pralldämpfer 1' durch eine Schaltmöglichkeit zwei verschiedene Längssteifigkeiten gegeben, wodurch eine geringere oder eine höhere Energieabsorption bei der plastischen Verformung des Pralldämpfers 1' erfolgt. Das dem Aufprall angepasste Deformationsverhalten führt zu einer Reduzierung der Insassenbelastung, da die Energieabsorption im Pralldämpfer 1' optimiert wird. Außerdem kann durch die Steuerung des Pralldämpfers 1' auch auf die Crashkompatibilität des Fahrzeuges in Bezug auf dessen Unfallgegner Rücksicht genommen werden, und auch die Reparaturkosten des mit diesem Pralldämpfer 1' ausgestatteten Fahrzeuges können positiv beeinflusst werden.

In den Figuren 1a, 1b und 1c umfasst der Deformationskörper 3' des Pralldämpfers 1' ein Rohr 11, welches bei unbelastetem Pralldämpfer 1` mit einer Verjüngung am freien Ende 8 in einen Konus eines Sperrteils 6` hineinragt. Das Sperrteil 6` umfasst radial bewegbare Schieber 7', durch die in der gezeigten Stellung neben einem am Sperrteil festliegenden, ringförmigen Verformungskörper 9 auch ein ringförmiger Verformungskörper 10 axial unverschieblich in seiner Position gehalten ist. Der Verformungskörper 9 weist im engsten Durchgangsquerschnitt einen größeren Durchmesser auf als der Verformungskörper 10. Daraus resultiert, dass bei der axialen Verschiebung des Deformationskörpers 3' durch Belastung der Prallplatte 2' beim Fahrzeugaufprall das Rohr 11 durch den feststehenden Verformungskörper 10. Neben einer Verjüngung des Rohres 11 unter Vergrößerung der Wanddicke könnten hier auch axial verschiebbare Verformungskörper verwendet werden, die verformend auf das Rohr 11 einwirken.

Bei einem auf Grund eines Messsignales beim Fahrzeugaufprall weich eingestellten Pralldämpfer 1` wird, wie die Fig. 1b zeigt, das Rohr 11 auf Grund der Aufprallkraft (Pfeil F) durch die sich konisch verengende Bohrung des Verformungskörpers 9 gedrückt und umgeformt. Der Verformungskörper 10 hingegen ist durch die in der Schaltstellung A' des Sperrteils 6' zurückverschobenen Schieber 7' freigegeben worden und bewegt sich mit dem Rohr 11 mit, ohne auf dieses verformend einzuwirken. Damit ist hier die eingeleitete Deformation des Deformationskörpers 3` und damit die Energieabsorption beim Aufprall geringer als bei dem nach Fig. 2c härter eingestellten Prallkörper 1'. Hier wird der Verformungskörper 10 durch die in der Schaltstellung B' des Sperrteils 6' durch einen nicht näher dargestellten Antrieb vorgeschobenen Schieber 7' axial unverschiebar festgelegt, und damit das Rohr 11 in einer zusätzlichen Deformationsstufe durch die nun nachfolgende, engere Bohrung des Verformungskörpers 10 gedrückt.

## Patentansprüche

1. Pralldämpfer (1') für ein Kraftfahrzeug, mit einem beim Fahrzeugaufprall verformbaren Deformationskörper (3'), in dessen Weg ein Sperrteil (6') hineinragt, mit welchem auf Grund der Krafteinwirkung beim Aufprall eine plastische Verformung des Deformationskörpers (3') unter Absorption von Aufprallenergie herbeigeführt wird, wobei der Verformungswiderstand des Deformationskörpers (3') durch eine Steuerung in einer zusätzlichen Dekormationsstufe erhöht werden kann, wobei das Sperrteil (6') mindestens zwei Schaltstellungen (A, B) aufweist, in denen es in den Verschiebeweg des Deformationskörpers (3') hineinragt, wodurch der Deformationskörper (3') durch die Krafteinwirkung beim Aufprall weniger oder mehr plastisch verformt wird,
**dadurch gekennzeichnet,**
**dass** das Sperrteil (6') mindestens zwei nacheinander angeordnete, mit ansteigendem Widerstand einwirkende Verformungskörper (9, 10) umfasst, die wahlweise einzeln oder gemeinsam in den Verschiebeweg des Deformationskörpers (3) hineinragen.

2. Pralldämpfer nach Anspruch 1,
**dadurch gekennzeichnet,**
**dass** die Schaltstellungen (A', B') des Sperrteiles (6') auf Grund eines Aufprallmesswertes schaltbar sind.

3. Pralldämpfer nach Anspruch 1,
**dadurch gekennzeichnet,**
**dass** die Schaltstellungen (A' bzw. B') des Sperrteiles (6') auf Grund einer Precrasherkennung wählbar sind.

4. Pralldämpfer nach Anspruch 1,
**dadurch gekennzeichnet,**
**dass** ein bewegbarer Sperrschieber (7') am Sperrteil (6') gelagert ist.

## Claims

1. Impact absorber (1') for a motor vehicle, having a deformation body (3') which can be deformed in the event of a vehicle impact, in the path of which a lock part (6') projects, which causes a plastic deformation of the deformation body (3') so that it absorbs impact energy due to the force generated on impact, whereby the deformation resistance of the deformation body (3') can be increased in an additional deformation stage by means of a control, the lock part (6') having at least two switch positions (A, B) in which it projects into the displacement path of the deformation body (3'), as a result of which the deformation body (3') is plastically deformed to a greater or lesser degree by the force generated on impact,
**characterised in that**
the lock part (6') comprises at least two deformation bodies (9, 10) with an increasing resistance acting one after the other which optionally project individually or jointly into the displacement path of the deformation body (3).

2. Impact absorber as claimed in claim 1,
**characterised in that**
the switch positions (A=, B=) of the lock part (6') can be switched in response to an impact measurement value.

3. Impact absorber as claimed in claim 1,
**characterised in that**
the switch positions (A= respectively B=) of the lock part (6') may be selected on the basis of a pre-crash detection system.

4. Impact absorber as claimed in claim 1,
**characterised in that**
a displaceable lock slide (7') is mounted on the lock part (6').

## Revendications

1. Amortisseur de choc (1') pour un véhicule automobile comprenant un corps de déformation (3') déformable lors de l'impact du véhicule, dans la course duquel dépasse une partie de blocage (6'), avec laquelle une déformation plastique du corps de déformation (3') est causée en raison de l'effet de la force lors de l'impact avec absorption de l'énergie de choc, la résistance à la déformation du corps de déformation (3') pouvant être augmentée par une commande dans un niveau de déformation supplémentaire, la partie de blocage (6') présentant au moins deux positions de commutation (A, B), dans lesquelles elle dépasse dans la course de déplacement du corps de déformation (3'), de sorte que le corps de déformation (3') est déformé de façon plus ou moins plastique par l'effet de force au moment de l'impact,
**caractérisé en ce que**
la partie de blocage (6') comprend au moins deux corps de déformation (9, 10) disposés l'un après l'autre et agissant avec une résistance croissante, qui dépassent au choix individuellement ou ensemble dans la course de déplacement du corps de déformation (3).

2. Amortisseur de choc selon la revendication 1,
**caractérisé en ce que**
les positions de commutation (A', B') de la partie de blocage (6') peuvent être commutées sur la base d'une valeur de mesure d'impact.

3. Amortisseur de choc selon la revendication 1,
**caractérisé en ce que**
les positions de commutation (A' et B') de la partie de blocage (6') peuvent être choisies sur la base d'une détection de pré-collision.

4. Amortisseur de choc selon la revendication 1,
**caractérisé en ce que**
un coulisseau de blocage (7') mobile est fixé sur la partie de blocage (6').
